# EUROPEAN PATENT APPLICATION

(11) **EP 2 365 658 A1**
(43) Date of publication of application: **14.09.2011**
(21) Application number: 10290129.5
(22) Date of filing: 12.03.2010
(51) Int. Cl.: H04L 1/16, H04L 1/00

(54) **Paging message including user data and/or ACK/NACK information**

(71) Applicant: RESEARCH IN MOTION LIMITED, Waterloo, Ontario N2L 3W8 (CA)
(72) Inventor: Borsella, Remo, Waterloo ON N2L 3W8 (CA); Hanov, Steven Michael, Waterloo ON N2L 3W8 (CA); Hole, David Philip, SL1 3XE Slough (GB); Kreuzer, Werner Karl, 10117 Berlin (DE); Venkob, Satish, Waterloo ON N2L 3W8 (CA)
(74) Representative: Bonnans, Arnaud

(57) **Abstract**

This document discusses, among other things, a method for receiving a paging message at a mobile station. The method includes receiving a plurality of overhead information elements of a paging message. A mobile identify information element of the paging message is also received. Finally, at least one of user data or receipt acknowledgement information is received in a portion of the paging message.

## Description

### RELATED APPLICATIONS

This application is related to patent applications having docket numbers 2558.053US1 (37760-ID), 2558.055EP1 (37738-ID), 2558.056EP1 (37759-ID), 2558.057EP1 (37760-1-ID), 2558.058EP1 (37760-2-ID), which are all filed concurrently herewith.

### BACKGROUND

Cellular networks use a certain amount of signaling overhead for transmission and reception of data. The signaling overhead is used to establish and release a connection, as well as for acknowledging the correct delivery of data packets in a packet switched system. Examples of packet switched systems include General Packet Radio Service (GPRS) and Enhanced GPRS.

One example of signaling overhead includes paging messages transmitted by a base station over a paging channel. Paging messages are received by a mobile station to which the paging message is addressed, and contain signaling information for the mobile station including information regarding related mobile terminated service (e.g., a mobile terminated call or a downlink packet transfer) notified by the paging message.

### OVERVIEW

The overhead information used is largely independent of the amount of data to be transferred. In systems that use efficient data compression techniques, or for applications that transmit small data packets, or both, the time and energy used to perform the signaling overhead may exceed the time and energy used for data transmission. Accordingly, this document discusses, among other things, a method for small data transfers to a mobile station by including the data within a paging message on the paging channel.

Example 1 includes a method to receive a paging message at a mobile station which includes receiving a plurality of overhead information elements of a paging message. The method also includes receiving a mobile identity information element of the paging message and receiving at least one of user data or receipt acknowledgement information in at least a portion of the paging message.

In example 2, the method of example 1 optionally includes wherein the at least one of user data or receipt acknowledgement information is received within a rest octets information element.

In example 3, the method of one or any combination of examples 1-2 optionally include wherein the at least one of user data or receipt acknowledgement information is the only data within the rest octets information element.

In example 4, the method of one or any combination of examples 1-3 optionally include wherein the rest octets information element includes the at least one of user data or receipt acknowledgement information and at least one section of miscellaneous information.

In example 5, the method of one or any combination of examples 1-4 optionally include wherein the at least one of user data or receipt acknowledgement information is addressed to a mobile station identified in the mobile identity information element.

In example 6, the method of one or any combination of examples 1-5 optionally include wherein the paging message has a defined number of bits equal to the length of a radio block

In example 7, the method of one or any combination of examples 1-6 optionally include wherein the paging message comprises payload data and error correction data, wherein an amount of error correction data is selected in order to increase an amount of payload data for the paging message.

In example 8, the method of one or any combination of examples 1-7 optionally include waking for a first wake period and transmitting first data during the first wake period. Wherein receiving one of user data or receipt acknowledgement information includes receiving receipt acknowledgement information during the first wake period, and sleeping after receiving receipt acknowledgement information and transmitting first data.

Example 9 includes a mobile station to receive a paging message, the mobile station comprising a processor. The processor is configured to receive a plurality of overhead information elements of a paging message. The processor is also configured to receive a mobile identity information element of the paging message. Finally, the processor is configured to receive at least one of user data or receipt acknowledgement information in a portion of the paging message.

In example 10, the method of example 9 optionally includes wherein the at least one of user data or receipt acknowledgement information is received within a rest octets information element of the paging message.

In example 11, the method of one or any combination of examples 9-10 optionally include wherein the at least one of user data or receipt acknowledgement information is the only data within the rest octets information element.

In example 12, the method of one or any combination of examples 9-11 optionally include wherein the rest octets information element includes the at least one of user data or receipt acknowledgement information and at least one section of miscellaneous information.

In example 13, the method of one or any combination of examples 9-12 optionally include wherein the at least one of user data or receipt acknowledgement information is addressed to a mobile station identified in the mobile identity information element.

In example 14, the method of one or any combination of examples 9-13 optionally include wherein the paging message has a defined number of bits equal to the length of a radio block.

In example 15, the method of one or any combination of examples 9-14 optionally include wherein the paging message comprises payload data and error correction data, wherein an amount of error correction data is selected in order to increase an amount of payload data for the paging message.

These examples can be combined in any permutation or combination. This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates generally an example of a wireless network for sending a paging message from a base station to a mobile station.
FIG. 2 illustrates generally an example of a paging message for transmission from a base station to a mobile station.
FIG. 3 illustrates generally an example of a paging message including in a rest octets information element at least one of user data or receipt acknowledgement information in addition to the miscellaneous information of the paging message of FIG. 2.
FIG. 4 illustrates generally an example of a paging message including in a rest octets information element at least one of user data or receipt acknowledgement information having less miscellaneous information than the paging message of FIG. 3.

### DETAILED DESCRIPTION

The present inventor has recognized, among other things, a method for data transfers to a mobile station by including the data within a paging message sent to the mobile station.

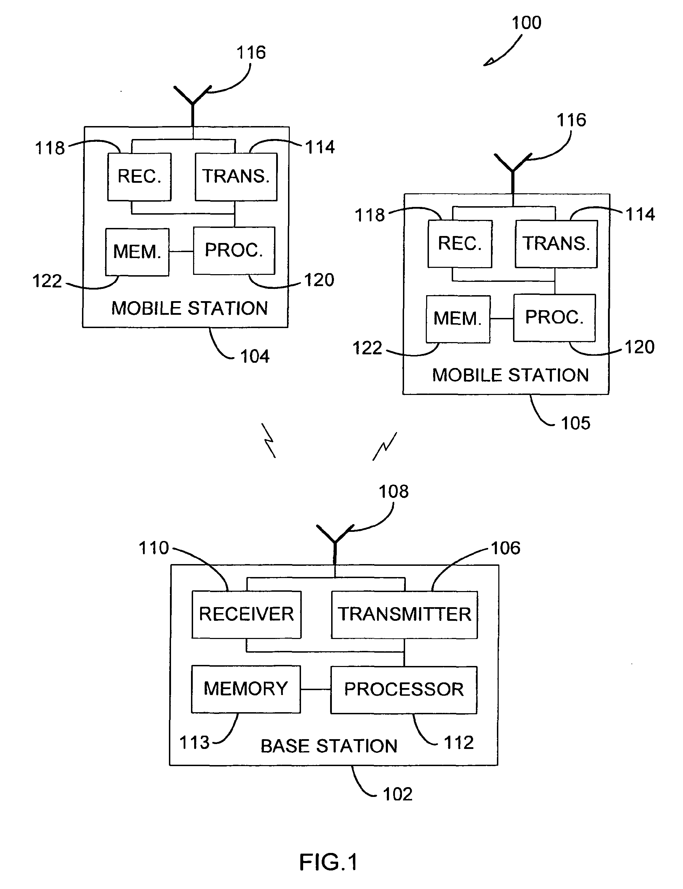

Figure 1 illustrates generally an example of a wireless network 100 for sending a paging message from a base station 102 to one or more mobile stations 104, 105. Base station 102 can include at least one transmitter 106 for transmitting signals (e.g., wireless signals) to the one or more mobile stations 104, 105. Base station 102 can also include at least one antenna 108 coupled to the at least one transmitter 106 for radiating signals transmitted by the at least one transmitter 106. Base station 102 can also include at least one receiver 110 for receiving signals (e.g., wireless signals) sensed by the at least one antenna 108 and transmitted by the one or more mobile stations 104, 105. Base station 102 can include a processor 112 coupled to a memory device 113. The memory device 113 can contain instructions which, when executed by the processor 112 can cause the processor 112 to perform operations to transmit information (e.g., a paging message) with the at least one transmitter 106 and receive information (e.g., an upstream message) with the at least one receiver 112.

The mobile stations 104, 105 can include at least one transmitter 114 and at least one receiver 116 coupled to at least one antenna 118. The at least one antenna 118 can radiate signals transmitted by the at least one transmitter 114 for reception by the base station 102. The at least one receiver 116 can receive signals from the base station 102 sensed by the at least one antenna 118. The mobile stations 104, 105 can include a processor 120 coupled to a memory device 122. The memory device 122 can contain instructions which, when executed by the processor 120 can cause the processor 120 to perform operations to transmit information (e.g., an upstream message) with the at least one transmitter 106 and receive information (e.g., a paging message) with the at least one receiver 112. In an example, the mobile station 104 comprises a new mobile station and the mobile station 105 comprises a legacy mobile station as discussed below.

In an example, the wireless network 100 operates at least partially according to a 3rd Generation Partnership Project (3GPP) based standard. In an example, the wireless network operates according to a Global System for Mobile Communications (GSM) family of a 3GPP based standard. For example, the wireless network 100 can operate according to the Enhanced Data rates for GSM Evolution (EDGE) (also referred to as Enhanced General Packet Radio Service (EGPRS)) standard.

In an example, the wireless network 100 can use one or more traffic channels and one or more signaling channels as defined by the communication standard. The traffic channels can primarily carry user data, while the signaling channels can primarily carry control data (e.g., signaling data). In an example, one or more downlink (e.g., from the base station 102 to the mobile station 104) signaling channels can include one or more paging channels (or sub-channels) that are used to carry paging messages to the one or more mobile stations 104, 105. In an example, the paging channel is used to carry paging messages from the base station 102 to the one or more mobile stations 104, 105. In an example, the paging sub-channel is part of a common control channel (CCCH) according to a GSM family of standards. In an example, the paging message is used within a paging procedure to establish a radio resource connection between the base station 102 and a mobile station 104. In an example, the paging message is used in accordance with a discontinuous reception (DRX) method by the mobile stations 104. Accordingly, the paging message can be transmitted on the paging sub-channel of CCCH to a mobile station 104 in idle mode, or in packet idle mode when a packet common control channel (PCCCH) is not present in a given cell.

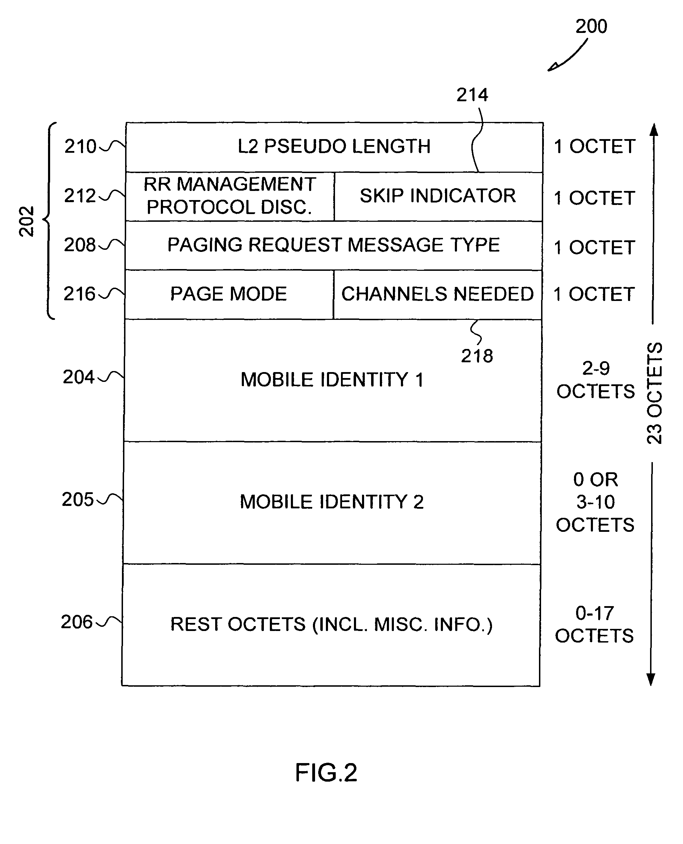

Figure 2 illustrates an example of a paging message 200 (also referred to as a paging request message) transmitted from the base station 102 to the mobile stations 104, 105. In an example, the paging message 200 is configured according to a 3GPP based standard. In an example, the paging message 200 is configured according to a GSM family of a 3GPP based standard. For example, the paging message 200 can be configured according to the Enhanced Data rates for GSM Evolution (EDGE) (also referred to as Enhanced General Packet Radio Service (EGPRS)) standard.

In an example, the communication standard used by the wireless network 100 supports a plurality of different types of paging messages 200. Each type of paging message 200 can have a different structure (e.g., length and/or different information elements (IEs)). The example paging message 200 illustrated in Figure 2 is configured according to a type 1 paging message as defined by a standard in the GSM family of standards. Here, the paging message 200 includes a plurality of overhead IEs 202, a first mobile identity IE 204, a second mobile identity IE 205, and a rest octets IE 206.

In an example, the communication standard used by the wireless network 100 defines that the paging message 200 is to use all the bits of one radio block. The communication standard can also define the number of bits that comprise a radio block. Accordingly, the paging message 200 can have a defined number of bits equal to the number of bits of a radio block. In an example, the radio block is 456 bits as defined by a standard in the GSM family of standards.

In an example, the paging message 200 includes error correction information along with payload data. In an example, the payload data can comprise the actual data of the information elements for the paging message 200. For example, the payload data can include the actual data of the overhead IEs 202, the mobile identity IEs 204, 205, and the rest octets IE 206. These payload data bits can be coded for transmission by adding redundant error correction bits to the payload data bits. The resulting paging message 200 comprises the payload data bits and the error correction data bits. In an example, the rate of error correction is defined for the paging message 200 and, therefore, the number of error correction bits added to the payload data is also defined. In an example, the defined error correction rate results in 23 octets (184 bits) for the payload data in the paging message 200. In an example, the 23 octets for the paging message 200 can comprise 4 octets of overhead IEs, a first mobile identity IE 204 comprising 2 to 9 octets, an optional second mobile identity IE 205 comprising 3 to 10 octets when present or 0 octets when not present, and a rest octets IE 206 comprising 0 to 17 octets.

In order for the mobile stations 104, 105 to determine what type of paging message 200 is being received, the overhead IEs 202 can include a message type IE 208 that identifies the type of paging message 200. Based on the type of paging message 200 indicated, the mobile stations 104, 105 can determine how to decode the bits of the paging message 200 received based on the structure of the given paging message 200. In an example, the overhead IEs 202 can include a message length IE 210 that carries information about the length of the paging message 200. In an example, the length IE 210 can indicate the length of the paging message 200 excluding the rest octets IE 206. The overhead IEs 202 can also include a radio resource management protocol discriminator IE 212, a skip indicator IE 214, a page mode IE 216, and a channels needed for mobiles 1 and 2 IE 218 (also referred to herein as the "channels needed IE 218").

In an example, mobile stations 104, 105 can be grouped into separate groups with each group assigned to listen to one paging message 200 of a repeating series of paging messages 200. For example, a plurality of mobile stations can be separated into 4 groups and the base station 102 can transmit 4 paging messages 200 in a sequence, each of the 4 paging messages directed toward a different group of mobile stations. Thus, each mobile station does not have to listen to every paging message 200 transmitted. Instead, each mobile station 104 can listen to the paging message 200 directed toward the group in which the mobile station 104, 105 belongs, and ignore the other paging messages 200. Accordingly, for example, each mobile station 104, 105 can listen for a paging message 200 one quarter of the time. The page mode IE 216 can be used to notify mobile stations of a group to which the paging message is directed.

In an example, a given paging message 200 may contain information for 2 of 8 mobile stations of a group of mobile stations. All 8 mobile stations 104 can listen for the paging message 200, but the information within each mobile identity IEs 204, 205 can be addressed to 1 of the 8 mobile stations. Thus, two mobile stations can be identified by the paging message 200, one mobile station in the first mobile identity IE 204 and a second mobile station in the second mobile identity IE 205. The other 6 mobile stations 104, once determining that the mobile identity IEs 204, 205 are not addressed to them can ignore any other information in the mobile identity IEs 204, 205 and rest octets IE 206. These other 6 mobile stations can, however, check for additional requirements which may be contained in the page mode IE 216.

As mentioned above, the paging message 200 can contain paging information directed to a mobile station 104, 105 that is identified by the mobile identity IE 204, 205. For example, a first mobile identity IE 204 can identify a first mobile station 104 and a second mobile identity IE 205 can identify a second mobile station 105. One or more channels indicated by the channels needed IE 218 can be associated with the first and second mobile station 104, 105. Accordingly, a mobile station 104 identified by the first mobile identity IE 204 can be notified by an associated portion of the channels needed IE 218 about a type of channel to be used for the transaction linked to the paging procedure. A mobile station 105 identified by the second mobile identity IE 205 can be notified by an associated part of the channels needed IE 218 about the type of channel to be used for the transaction linked to the paging procedure.

The rest octets IE 206 can contain miscellaneous information for a mobile station 104 as described below. In an example, each item of miscellaneous information is contained within its own section of the rest octets IE 206. A given section can either contain the appropriate miscellaneous information, or can be omitted when none of the given miscellaneous information is present to send. As the miscellaneous information may not completely fill the rest octets IE 206, padding bits can be inserted after the miscellaneous information to expand the paging message 200 to 23 octets in order to equal the length of a radio block as defined by the standard.

In an example, the miscellaneous information can include information specified in standard releases prior to incorporation of user data or receipt acknowledgment information in a rest octets IE as described below. In an example, the miscellaneous information can include a section for information regarding reduced monitoring of the notification channel (NLN(PCH)), the status of content on an existing notification channel and a priority level associated to the call. The miscellaneous information can also include a section for the binary code of the group call reference together with the service flag (Reduced GCR). The miscellaneous information can also include a section for a 36-bit value that is used for derivation of a short term key (VSTK_RAND). The miscellaneous information can also include a section for a global cell count used by the voice group call service (VGCS) and/or voice broadcast service (VBS) ciphering mechanism (CELL_GLOBAL_COUNT). The miscellaneous information can also include a section for MBMS information that contains information related to specific MBMS sessions (MBMS pre-notification or MBMS Notification i). The miscellaneous information can also include a list of MBMS sessions (MBMS Session List). The miscellaneous information can also include a section for the MBMS channel parameters for one or MBMS sessions (MBMS Channel Parameters). The miscellaneous information can also include a section for an indication of the set of AMR codec modes to be used on a group channel (AMR_Config). The miscellaneous information can also include a section for the method to be used for priority uplink access related to talker priority and sending of application data (Priority Uplink Access). The miscellaneous information can also include the number of segments for the earthquake-tsunami warning system (ETWS) notifications (Total Segments for ETWS). The miscellaneous information can also include a section for the segment number of the ETWS primary notification (Segment Number). The miscellaneous information can also include a section for an identifier to determine the set of segments belonging to a certain ETWS Primary Notification message (PNI). The miscellaneous information can also include a section for the length of a segment in number of bits (Length of Segment). The miscellaneous information can also include a section for the ETWS primary notification data (ETWS Primary Notification Data).

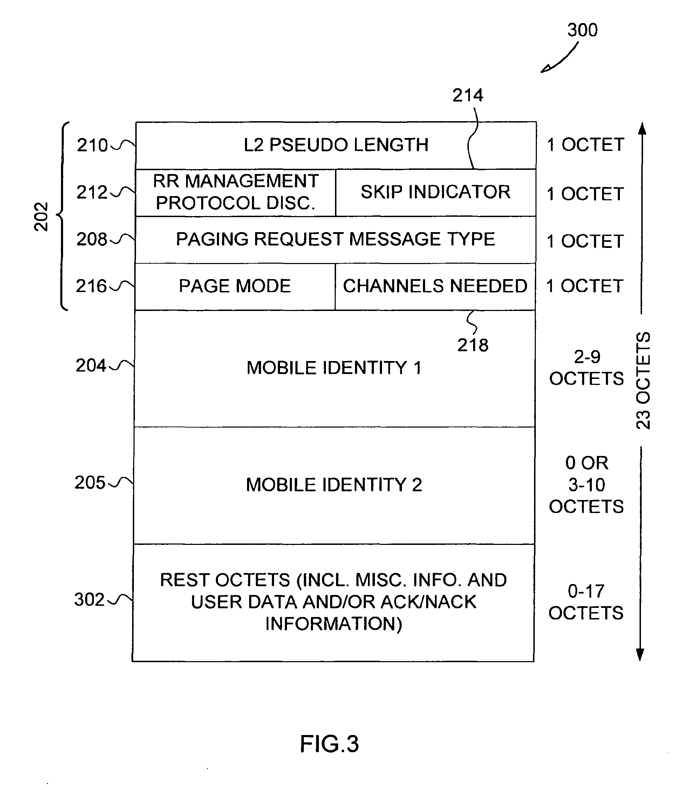

Figure 3 illustrates an example of a paging message 300 having at least one of user data or receipt acknowledgement information included in a rest octets IE 302 of the paging message 302. In an example, paging message 300 is configured according to a GSM based standard. In an example, the paging message 300 comprises the same IEs as the paging message 200 described with respect to Figure 2. Additionally, the overhead IEs 202 and the mobile identity IE(s) 204, 205 are substantially the same as described with respect to the paging message 200. The rest octets IE 302, however, contain at least one of user data or receipt acknowledgement information as described below in addition to the same miscellaneous information as described with respect to the rest octets IE 206 of paging message 200.

In an example, user data is included in the rest octets IE 302. In an example, user data includes information (e.g., text) originating at an end user device and sent to the mobile station 104. As examples, the end user device can include a mobile station communicating over a wireless network, or a personal computer communicating over the internet. As an example, the user data can include text input by a first user into the end user device or data from an application executing on the end user device. As an example, user data can does not include control or signaling data originating at the base station 102 or a base station controller.

In an example, receipt acknowledgement information is included in the rest octets IE 302. In an example, receipt acknowledgement information can include acknowledgement or negative acknowledgement information in regards to receipt of one or more messages, data blocks, segments, or packets from the mobile station 104 at the base station 102. As known to those skilled in the art, acknowledgement information (ACK) can be sent from the base station 102 in response to the one or more messages, data blocks, segments, or packets sent by the mobile station 104 to indicate that the base station 102 accurately received the one or more messages, data blocks, segments, or packets from the mobile station 104. Likewise, negative acknowledgement information (NACK) can be sent from the base station 102 to the mobile station 104 to indicate that the base station 102 did not accurately receive the one or more messages, data blocks, segments, or packets from the mobile station 104. In an example, both receipt acknowledgement information and user data are included in the rest octets IE 302.

In an example, at least one of user data and receipt acknowledgement information is included after any miscellaneous information in the rest octets IE 302 of the paging message 300. In an example, the rest octets IE 302 can contain one or more overhead tags indicating whether a given section contains data. In an example, the overhead tag for a section is present (indicating no data) when the given section does not contain data. Accordingly, the rest octets IE 302 can include the overhead tags and the sections of data for any miscellaneous information followed by one or more sections for the at least one of user data and receipt acknowledgement information.

In an example, it is determined whether there are bits available in the paging message 300 for insertion of the at least one of user data or receipt acknowledgement information. In an example, there are bits available in the rest octets IE 302 when there would be padding bits added to the rest octets IE 302. Accordingly, the at least one of user data or receipt acknowledgement information can be added to the rest octets IE 302 when there would be padding bits added to the rest octets IE 302. The at least one of user data and receipt acknowledgement information can be used instead of all, or a portion of, the padding bits in the rest octets IE 302. When no padding bits would be available, the at least one of user data and receipt acknowledgement information can be saved for another paging message 300 or sent to the mobile station 104 via another channel.

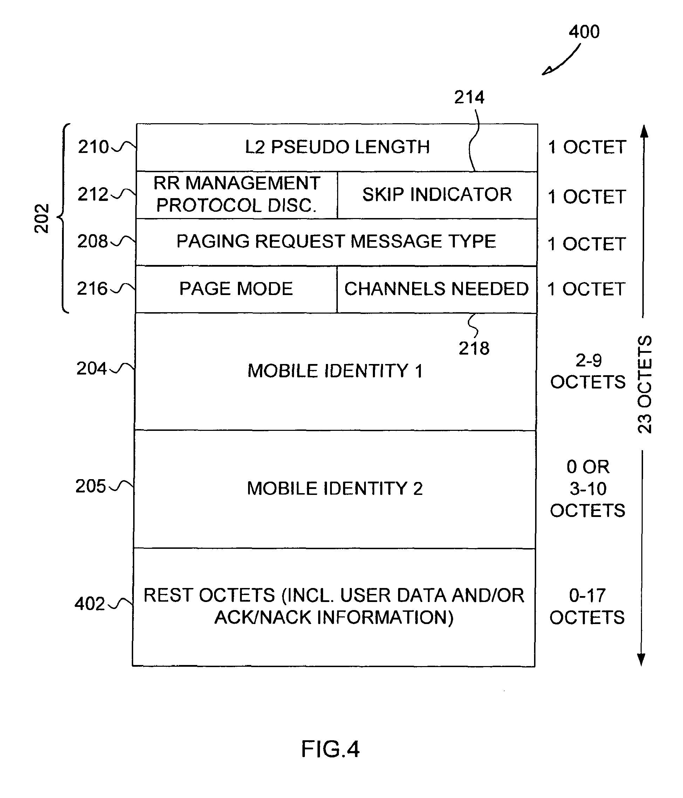

As mentioned above, a paging message (e.g., paging message 200, 300 above, or paging message 400 discussed below with respect to Figure 4) has a given type that is identified in the message type IE 208. The type of the paging message 200, 300, 400 is used by a mobile station 104, 105 receiving the paging message to determine the structure of the paging message 200. In an example, a paging message having a new structure can be released for use in wireless network 100. There may be a period of time before all the mobile stations 104, 105 and/or base station(s) 102 are updated to support the new paging message. As used herein, a recently released paging message is referred to as a "new paging message". Likewise, a paging message released prior to the new paging message is referred to herein as a "legacy paging message". In an example where a GSM family of standards is used, legacy paging messages comprise type 1, type 2, and type 3 paging messages; a type 1 paging message is shown as the paging message 200 of Figure 2.

A mobile station 104 that is configured to support a new paging message is referred to herein as "new mobile station 104", and a mobile station 105 that can support a legacy paging message, but cannot support a new paging message is referred to herein as a "legacy mobile station 105". In an example, the new mobile station 104 can comprise similar hardware to the legacy mobile station 105, but having different instructions stored on the memory 122. In another example, the new mobile station 104 can have different hardware than the legacy mobile station 105. Likewise, a "new base station" refers to a base station that can support a new paging message, and a "legacy base station" refers to a base station that can support a legacy paging message, but not a new paging message.

Paging message 300 also illustrates a type 1 paging message, however, paging message 300 is a new paging message that is different than a legacy type 1 paging message (e.g., paging message 200). Paging message 300 is different because paging message 300 has the at least one of user data or message receipt information added to the rest octets IE 302. In an example, the at least one of user data or receipt acknowledgement information can be added to a type 2 or type 3 paging message in a manner similar to that described with respect to paging message 300. Accordingly, the at least one user data or receipt acknowledgement information can be included with the miscellaneous information in the rest octets IE of a type 2 or type 3 paging message.

Advantageously, the paging message 300 can be accurately decoded by both a new mobile station 104 and a legacy mobile station 105. The new mobile station 104 can be configured to recognize the sections or tags for the at least one of user data or receipt acknowledgement information. Accordingly, the new mobile station 104 can properly decode these sections when received. In an example, the user data and receipt acknowledgement information are both identified by the same section and tag. In another example, the user data can have a distinct section and tag from the receipt acknowledgement information.

The legacy mobile station 105 can also accurately decode the same paging message 300, but cannot decode the at least one of user data and receipt acknowledgement information. In an example, the legacy mobile station 105 will decode the sections of miscellaneous information, and when reaching the last section of miscellaneous information known by the legacy mobile station 105, the mobile station will ignore any bits following this last known section of the rest octets IE 206. Accordingly, the legacy mobile station 105 will ignore the at least one of user data or receipt acknowledgement information following the miscellaneous information.

In an example, the at least one of user data or receipt acknowledgement information is addressed to the mobile station (e.g., 104) that is identified by the first mobile identity IE 204. For example, the at least one of user data and receipt acknowledgement information in the rest octets IE 402 can be defined as being addressed to the same mobile station 104 as identified in the first mobile identity IE 204. Accordingly, no separate address for the at least one of user data and receipt acknowledgement information is needed. Instead, the mobile station 104 identified by the first mobile identify IE 204 knows based on the definition that the at least one of user data and receipt acknowledgement information is being sent to that mobile station 104. In another example, the at least one of user data and receipt acknowledgement information is addressed to the mobile station that is identified by the second mobile identity IE 205. In yet another example, there are two sections of user data or receipt acknowledgement information in the rest octets IE 206, and each section is addressed to one of the mobile identity IEs 204, 205. In another example, extended paging is used such that a first paging message 300 comprises user data or receipt acknowledgement information addressed to a first mobile station identified by a mobile identity IE 204, 205 and a second paging message 300 comprises user data or receipt acknowledgement information addressed to a second mobile station identified by a mobile identity IE 204, 205 of the second paging message 300. In still another example, the at least one of user data or receipt acknowledgement information is addressed separately from the mobile identity IEs 204, 205.

As mentioned above, the paging message 300 can comprise a new paging message having a type (e.g., type 1) that matches a type of a legacy paging message. In an example, for this legacy type, a length indicated in the message length IE 208 does not include the rest octets IE 206. Thus, for example, the paging message 300 can comprise 4 octets of overhead IEs 202, 10 octets of mobile identity IEs 204, 205, 8 octets for the rest octets IE 302. Accordingly, the length indicated in the message length IE 210 would be 14 octets.

In an example, the rate of error correction used for the paging message 300 is selected in order to optimize the amount of payload data for the paging message 300. For example, the rate of error correction can be reduced from a current state resulting in fewer error correction bits added to the payload data. Accordingly, additional payload data can be included based on the remaining bits of the length defined by the communication standard (e.g., a radio block). In an example, the rate of error correction is adjusted dynamically based on the condition of the paging channel. For example, when the paging channel has a high signal to noise ratio, the rate of error correction is decreased and additional payload data can be included in the paging message 300. When the paging channel has a low signal to noise ratio, the rate of error correction is increased and less payload data is included in the paging message 300. In another example, the rate of error correction is adjusted based on the error rate desired for the particular transmission. For example, a paging message 300 that can tolerate a higher error rate can be sent with a lower rate of error correction resulting in additional bits for payload data.

Figure 4 illustrates another example of a paging message 400 having at least one of user data or receipt acknowledgement information included in a rest octets IE 402. In an example, paging message 400 is configured according to a GSM based standard. In an example, the overhead IEs 202 and the mobile identity IE(s) 204, 205 of the paging message 400 are substantially as describe above with respect to the paging message 300. The paging message 400, however, is a new type of paging message in which the rest octets IE 402 do not contain the same miscellaneous information as described with respect to the rest octets IE 206 of paging message 300. In an example, the paging message 400 is a type 4 paging message.

In an example, the rest octets IE 402 contains at least one of user data or receipt acknowledgement information, but does not contain any of the miscellaneous information described with respect to paging message 200. Here, for example, neither the overhead tags nor the actual data in the sections for the miscellaneous information is included such that all the bits of the rest octets IE 402 are available for the at least one of user data or receipt acknowledgement information.

In another example, the rest octets IE 402 contains at least one of user data or receipt acknowledgement information, along with a portion of the miscellaneous information described with respect to the paging message 200 and/or other information. For example, the rest octets IE 402 of the paging message 400 can contain an ETWS section, but no other sections or overhead tags for miscellaneous information. In another example, the rest octets IE 402 can contain the packet page indication section of the miscellaneous information, but no other sections or overhead tags for miscellaneous information.

In an example, the paging message 400 is identified as a new type (e.g., type 4) of paging message in the type IE 208. The new type can indicate that the rest octets 402 do not contain all of the miscellaneous information as defined by the legacy types (e.g., type 1, type 2, and type 3) of paging messages, and that the rest octets 402 can contain at least one of user data and receipt acknowledgement information.

In an example, since the paging message 400 is a new paging message having a new type, legacy mobile stations 105 cannot accurately receive the paging message 400. New mobile stations 104, however, can accurately receive the paging message 400, since the new mobile station 104 is configured to support the new type (e.g., type 4) of paging message. Advantageously, the new type of paging message 400 provides additional bits for the at least one of user data and receipt acknowledgement information due to the lessening of bits for miscellaneous information in the rest octets IE 402.

In an example, the at least one of user data and receipt acknowledgement information in the rest octets IE 402 is defined as being addressed to the same mobile station 104 as identified in the first mobile identity IE 204. Accordingly, no separate address for the at least one of user data and receipt acknowledgement information is needed. Instead, the mobile station 104 identified by the first mobile identify IE 204 knows based on the definition that the at least one of user data and receipt acknowledgement information is being sent to that mobile station 104.

In an example, paging messages having a new type (e.g., paging message 400) can be sent over distinct paging channels or sub-channels from the paging channels or sub-channels that paging messages having a legacy type (e.g., paging message 200, 300) are sent over. In an example, the distinct paging channel or sub-channel having the new type of paging message can also carry legacy types of paging messages. The other paging channels or sub-channels carry legacy types of paging messages, but not new types of paging messages. In an example, new mobile stations 104 can be instructed to monitor the paging channels or sub-channels corresponding to the paging messages having a new type. Likewise, legacy mobile stations 105 can be instructed to monitor the paging channels corresponding to the paging messages having the legacy type. Accordingly, new paging messages 400 (possibly along with legacy paging messages) can be sent to new mobile stations 104. Likewise, legacy paging messages 200 can be sent to legacy mobile stations 105, but new paging messages 400 are not sent to legacy mobile stations 105.

In an example, the rate of error correction used for the paging message 400 is selected in order to optimize the amount of payload data for the paging message 400. For example, the rate of error correction can be reduced from a current state resulting in fewer error correction bits added to the payload data. Accordingly, additional payload data can be included based on the remaining bits of the length defined by the communication standard (e.g., a radio block). In an example, the rate of error correction is adjusted dynamically based on the condition of the paging channel. For example, when the paging channel has a high signal to noise ratio, the rate of error correction is decreased and additional payload data can be included in the paging message 400. When the paging channel has a low signal to noise ratio, the rate of error correction is increased and less payload data is included in the paging message 400. In another example, the rate of error correction is adjusted based on the error rate desired for the particular transmission. For example, a paging message 400 that can tolerate a higher error rate can be sent with a lower rate of error correction resulting in additional bits for payload data.

Advantageously, including at least one of user data or receipt acknowledgement information in a paging message 300, 400 provides an efficient means to transport data (e.g., small data transfers) from the base station 102 to the mobile station 104. In certain examples, the overhead required to set up a channel to transport user data or receipt acknowledgement information can be avoided or reduced. Additionally, in certain examples, the mobile station 104 may only be required to wake for a short period of time, and can receive the user data or receipt acknowledgement information by simply receiving the paging message 300, 400.

In an example, a mobile station 104 is configured to transmit data to the base station 102 near in time to a time of reception of a paging message 300, 400. For example, if a mobile station 104 is assigned to receive a paging message 300, 400 once every 0.5 seconds, the mobile station 104, when in an inactive mode (not currently in a call or data session), can be configured to sleep for 0.4 seconds between each reception of a paging message 300, 400. The mobile station 104 can awake shortly before receiving the paging message 300, 400, and return to sleep after receiving the paging message 300, 400. In an example, the mobile station 104 is configured to send data to the base station 102 during the period in which the mobile station 104 awakes for reception of the paging message 300, 400. Accordingly, the mobile station 104 can optimize battery life by awaking only once for both sending of the data and reception of the paging message 300, 400.

In an example, the mobile station 104 can awake at time t=0 for a wake period. At time t=0.05, the mobile station 104 can receive a paging message 300, 400. At time t=0.10, the mobile station 104 can transmit data to the base station 102. At time t=0.15, the mobile station can sleep, ending the wake period. At time t=0.50 seconds, the mobile station 104 can awake again for another wake period repeating the receiving and transmitting and returning to sleep. In an example, the data transmitted after reception of the paging message 300, 400 can be in response to information in the paging message 300, 400. In an example, the data transmitted from the mobile station 104 to the base station 102 can be transmitted on a random access channel.

In another example, the mobile station 104 can awake a time t=0 for a wake period. At time t=0.05, the mobile station 104 can transmit data to the base station 102. At time t=0.10, the mobile station 104 can receive a paging message 300, 400. At time t=0.15, the mobile station can sleep, ending the period of time. At time t=0.50 seconds, the mobile station 104 can awake again for another period of time repeating the transmitting and receiving and returning to sleep. In an example, receipt acknowledgement information can be received in the paging message 300, 400 in response to data transmitted during the same wake period. For example, the receipt acknowledgement information can be an ACK or NACK of the data transmitted during the same wake period. In another example, the receipt acknowledgement information can be an ACK or NACK of data transmitted during a different wake period. In an example, the data transmitted from the mobile station 104 to the base station 102 can be transmitted on a random access channel. In yet another example, the order of the receiving and transmitting by the mobile station 104 can be varied over a plurality of wake periods.

### Additional Notes

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

## Claims

1. A method to receive a paging message at a mobile station, the method comprising:
receiving a plurality of overhead information elements of a paging message;
receiving a mobile identity information element of the paging message; and
receiving at least one of user data or receipt acknowledgement information in a portion of the paging message.

2. The method of claim 1, wherein the at least one of user data or receipt acknowledgement information is received within a rest octets information element of the paging message.

3. The method of claim 2, wherein the at least one of user data or receipt acknowledgement information is the only data within the rest octets information element.

4. The method of claim 2, wherein the rest octets information element includes the at least one of user data or receipt acknowledgement information and at least one section of miscellaneous information.

5. The method of claim 1, wherein the at least one of user data or receipt acknowledgement information is addressed to a mobile station identified in the mobile identity information element.

6. The method of claim 1, wherein the paging message has a defined number of bits equal to the length of a radio block.

7. The method of claim 1, wherein the paging message comprises payload data and error correction data, wherein an amount of error correction data is selected in order to increase an amount of payload data for the paging message.

8. The method of claim 1, further comprising:
waking for a first wake period;
transmitting first data during the first wake period;
wherein receiving one of user data or receipt acknowledgement information includes receiving receipt acknowledgement information during the first wake period; and
sleeping after receiving receipt acknowledgement information and transmitting first data.

9. A mobile station to receive a paging message, the mobile station comprising:
a processor configured to:
receive a plurality of overhead information elements of a paging message;
receive a mobile identity information element of the paging message; and
receive at least one of user data or receipt acknowledgement information in a portion of the paging message.

10. The processor of claim 9, wherein the at least one of user data or receipt acknowledgement information is received within a rest octets information element of the paging message.

11. The processor of claim 10, wherein the at least one of user data or receipt acknowledgement information is the only data within the rest octets information element.

12. The processor of claim 10, wherein the rest octets information element includes the at least one of user data or receipt acknowledgement information and at least one section of miscellaneous information.

13. The processor of claim 9, wherein the at least one of user data or receipt acknowledgement information is addressed to a mobile station identified in the mobile identity information element.

14. The processor of claim 9, wherein the paging message has a defined number of bits equal to the length of a radio block.

15. The processor of claim 9, wherein the paging message comprises payload data and error correction data, wherein an amount of error correction data is selected in order to increase an amount of payload data for the paging message.
